# EUROPÄISCHE PATENTSCHRIFT

(11) **EP 2 508 769 B1**
(45) Veröffentlichungstag und Bekanntmachung des Hinweises auf die Patenterteilung: **19.06.2013**
(21) Anmeldenummer: 11161286.7
(22) Anmeldetag: 06.04.2011
(51) Int. Cl.: F16C 32/04, H01F 3/02, H02K 1/16

(54) **Magnetische Axiallagervorrichtung mit erhöhter Eisenfüllung**
Magnetic axial bearing device with increased iron filling
Dispositif de palier magnetique axial doté d'un remplissage en fer augmenté

(43) Veröffentlichungstag der Anmeldung: 10.10.2012
(73) Patentinhaber: Siemens Aktiengesellschaft, 80333 München (DE)
(72) Erfinder: Vollmer, Rolf, 36129, Gersfeld (DE); Oestreich, Markus, 36110, Schlitz (DE); Schubert, Gunnar, 10439, Berlin (DE)

(56) Entgegenhaltungen:
- EP-A1- 0 795 881
- DE-A1- 19 842 948
- DE-T2- 69 103 756
- US-A- 5 153 475

## Beschreibung

Die vorliegende Erfindung betrifft eine Axiallagervorrichtung mit einer ringförmigen Elektroblechanordnung, bei der die einzelnen Bleche radial nach außen ragen, und einer elektrischen Spule, die in die Elektroblechanordnung eingefügt ist, zum Erzeugen eines Magnetfelds in der Elektroblechanordnung.

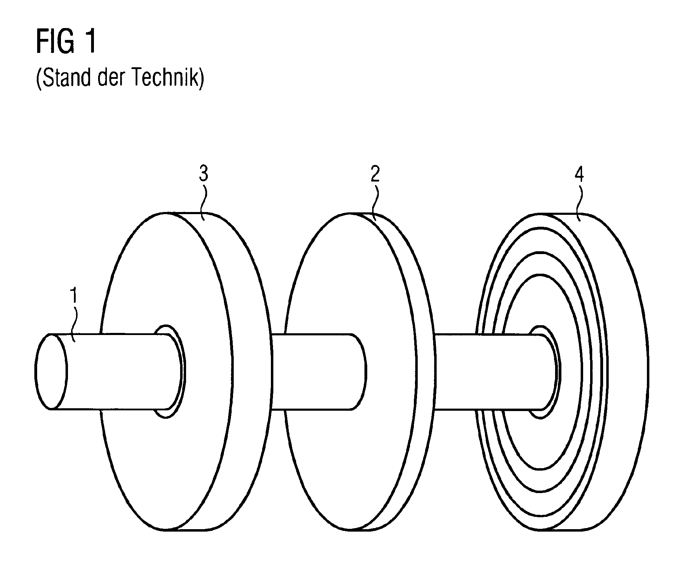

Aktive, magnetische Axiallager werden benutzt, um berührungslos definierte Abstände zwischen zwei Objekten einzustellen. Der prinzipielle Aufbau eines derartigen Axiallagers kann FIG 1 entnommen werden. In dem Beispiel wird eine Welle 1 axial gelagert. Eine Stahlscheibe 2 ist auf der Welle 1 konzentrisch befestigt. Neben der Stahlscheibe 2 weist die Axiallageranordnung hier zwei ringförmige Elektromagnete 3, 4 (hier auch Axiallagervorrichtungen genannt) auf, die an beiden Seiten der Stahlscheibe 2 koaxial mit dieser und mit der Welle 1 angeordnet sind. Während die Elektromagnete 3 und 4 statisch sind und beispielsweise an dem Gehäuse einer elektrischen Maschine befestigt sind, dreht sich die Welle einschließlich der Stahlscheibe 2 im Inneren der beiden Elektromagnete 3, 4.

Die Elektromagnete 3, 4 üben Kräfte auf weichmagnetische Materialien wie die Stahlscheibe 2 aus. Bei geeigneter Ansteuerung der Elektromagnete 3, 4 lässt sich die Stahlscheibe 2 an einer definierten axialen Position zwischen den Elektromagneten 3 und 4 berührungslos halten.

Die Elektromagnete 3, 4 werden in der Regel mit Ringspulen aufgebaut, die in einer Nut in einem Eisenständer angeordnet sind. Meist ist der Eisenständer massiv ausgeführt. In massiven Ständern führen Feldänderungen zu Wirbelströmen, die wiederum Gegenfelder erzeugen. Damit wird die Regelbarkeit der Magnetlager verschlechtert.

Wirbelströme werden in bekannter Weise durch Blechung des Ständereisens reduziert. Die Blechung von Axiallagerständern ist aus der Druckschrift DE 691 03 756 T2 bekannt. Dort sind Stator- und Rotorkomponenten eines magnetischen Drucklagers mit jeweils laminierter Konstruktion beschrieben. Die Lamellenbleche sind so gekrümmt, dass ihre Spitzen in einer gemeinsamen zylindrischen Ebene liegen. Außerdem liegen aneinanderstoßende Seitenränder der Lamellenbleche ebenfalls in gemeinsamen Ebenen, die senkrecht zur Achse der Rotation angeordnet sind.

Aus der EP 0 795 881 A1 ist eine elektromagnetische Vorrichtung für eine Kraftstoffeinspritzpumpe bekannt. Der Stator der elektromagnetischen Vorrichtung umfasst eine Mehrzahl von Elektroblechen, die spiralförmig um die Mittelachse des Stators angeordnet sind.

Die Aufgabe der vorliegenden Erfindung besteht darin, den Wirkungsgrad der magnetischen Axiallagervorrichtung zu verbessern.

Erfindungsgemäß wird diese Aufgabe gelöst durch eine **magnetische** Axiallagervorrichtung mit
- einer ringförmigen Elektroblechanordnung, bei der die einzelnen Bleche radial nach außen ragen **und benachbarte Bleche in Umfangsrichtung einen Spalt ausbilden**, und
- einer elektrischen Spule, die in die Elektroblechanordnung eingefügt ist, zum Erzeugen eines Magnetfelds in der Elektroblechanordnung, wobei
- die Elektroblechanordnung mindestens zwei konzentrische Elektroblechringe aufweist und
- im Wesentlichen alle benachbarten **Bleche** jedes Elektroblechrings am Innenumfang des jeweiligen Elektroblechrings zusammenstoßen.

Eine ringförmige Elektroblechanordnung bekannter Bauart weist Bleche auf, die durchgängig vom Innenumfang zum Außenumfang der Elektroblechanordnung reichen. Da die Elektrobleche überall gleiche Breite besitzen und am Innenumfang aneinandergrenzen, ergeben sich am Außenumfang entsprechend große Spalte zwischen benachbarten Blechen. Dadurch ist die Eisenfüllung einer derartigen ringförmigen Elektroblechanordnung nicht sehr hoch. In vorteilhafter Weise ist daher gemäß der vorliegenden Erfindung die Elektroblechanordnung in mindestens zwei konzentrische Elektroblechringe aufgeteilt. Die Elektrobleche reichen bei jedem Elektroblechring jeweils vom Innenumfang zum Außenumfang. Da nun die Elektrobleche auch bei dem äußeren der mindestens zwei Elektroblechringe an dessen Innenumfang aneinandergrenzen, kann eine höhere Eisenfüllung erreicht werden, da bei der konventionellen Elektroblechanordnung die Einzelbleche in der radialen Höhe des Innenumfangs des äußeren Elektroblechrings der erfindungsgemäßen Anordnung deutlich beabstandet sind.

Vorzugsweise besitzt die Elektroblechanordnung drei konzentrische Elektroblechringe, wobei der mittlere der Elektroblechringe eine Vertiefung bildet, in die die elektrische Spule eingefügt ist. Dabei ist es besonders vorteilhaft, wenn der mittlere Elektroblechring die gleiche radiale Breite wie die eingefügte elektrische Spule besitzt. Damit ist die Axiallagervorrichtung konstruktiv einfach herzustellen.

Außerdem kann in dem mittleren Elektroblechring eine Öffnung in axialer Richtung zur Durchleitung von Kabeln für die elektrische Spule angeordnet sein. Dies hat den Vorteil, dass die Anschlussleitungen für die elektrische Spule auf kürzestem Wege nach außen geleitet werden können, wobei der magnetische Kreis nur minimal gestört wird.

In einer bevorzugten Ausführungsform ist die Elektroblechanordnung in einem ringförmigen Topf untergebracht. Der Topf stabilisiert die Elektroblechanordnung in beiden radialen Richtungen und in einer axialen Richtung.

Die Elektroblechanordnung kann durch einen oder mehrere Halteringe in dem Topf gehalten werden. Dadurch ist die Elektroblechanordnung auch bezüglich der offenen Seite des Topfes fixiert.

Wenn ein solcher Haltering im Querschnitt T-förmig ausgebildet ist, kann er den inneren sowie den äußeren Elektroblechring in axialer Richtung formschlüssig in dem Topf halten. Damit werden durch einen einzigen Haltering zwei Elektroblechringe axial fixiert.

Darüber hinaus kann der mittlere Elektroblechring durch den inneren und äußeren Elektroblechring formschlüssig in dem Topf gehalten werden. Damit kann die gesamte Elektroblechanordnung, die hier aus drei Elektroblechringen besteht, durch einen einzigen Haltering, der, wie oben erwähnt, beispielsweise T-förmig ausgebildet ist, in dem Topf fixiert werden.

Gemäß einer weiteren bevorzugten Ausführungsform sind die Hohlräume zwischen den Blechen der Elektroblechanordnung mit einem Harz ausgefüllt. Dies stabilisiert die einzelnen Bleche untereinander und damit die gesamte Elektroblechanordnung und gewährleistet gleichzeitig die notwendige elektrische Isolation.

Besonders vorteilhaft kann eine elektrische Maschine mit einer derartigen Axiallagervorrichtung ausgestattet werden. Das magnetische Axiallager gewährleistet minimale Reibungsverluste.

Die vorliegende Erfindung wird nun anhand der beigefügten Zeichnungen näher erläutert, in denen zeigen:
- FIG 1: ein Axiallager gemäß dem Stand der Technik;
- FIG 2: eine Draufsicht auf einen Abschnitt eines Elektromagneten von FIG 1;
- FIG 3: eine Draufsicht auf eine Elektroblechanordnung eines ringförmigen Elektromagneten;
- FIG 4: eine vergrößerte Ansicht eines Ausschnitts von FIG 3 und
- FIG 5: eine Querschnittsansicht durch den Elektromagneten von FIG 2 ohne Spule.

Die nachfolgend näher geschilderten Ausführungsbeispiele stellen bevorzugte Ausführungsformen der vorliegenden Erfindung dar.

Beispielsweise besitzt ein Generator oder eine andere elektrische Maschine ein Axiallager, wie es prinzipiell in FIG 1 dargestellt ist. Die Elektromagnete 3 und 4 des Axiallagers, d. h. der Axiallageranordnung, besitzen einen erfindungsgemäßen Aufbau, wie er nachfolgend im Detail dargelegt wird. Der Aufbau ist einfach und führt zu einer hohen Eisenfüllung und einem robusten Verbund.

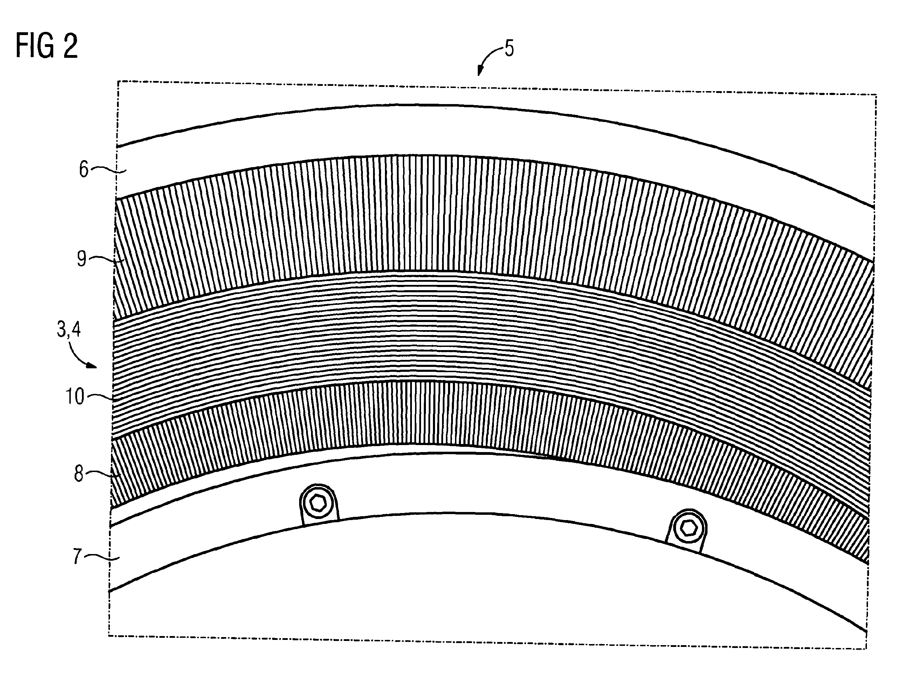

In FIG 2 ist eine Draufsicht auf einen Abschnitt eines Elektromagneten 3, 4 (Axiallagervorrichtung) dargestellt. Der Elektromagnet 3, 4 besitzt einen ringförmigen Topf 5, von dem in FIG 2 nur die konzentrischen Wände 6, 7 zu sehen sind.

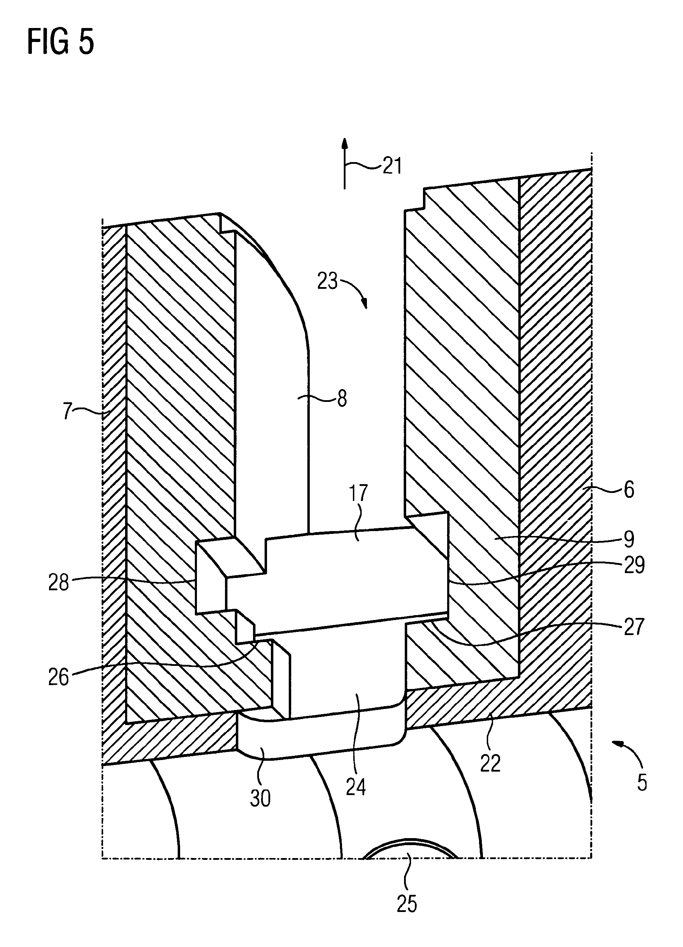

Der ringförmige Topf 5 ist mit einem geblechten inneren Ring 8 und einem geblechten äußeren Ring 9 gefüllt. Zwischen den beiden Ringen befindet sich eine Ringspule 10. Wie im Zusammenhang mit FIG 5 erläutert werden wird, bilden der innere Ring 8 zusammen mit dem äußeren Ring 9 und einem mittleren Ring unterhalb der Spule 10 eine ringförmige Nut, in die die Ringspule 10 eingefügt ist.

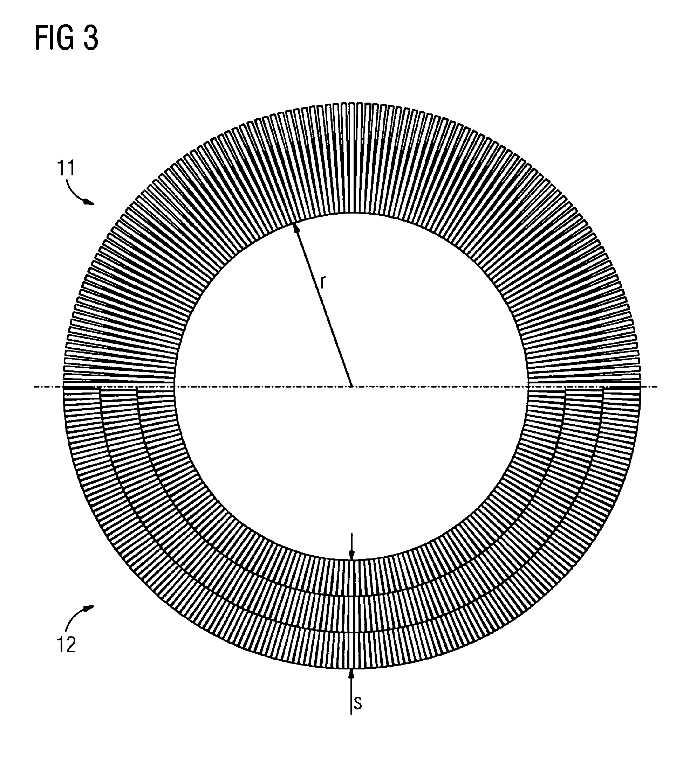

Aus FIG 3 ist die spezielle, erfindungsgemäße Art der Blechung des ringförmigen Magneten zu entnehmen. In der oberen Hälfte von FIG 3 ist eine konventionelle Blechung 11 zu erkennen. Die untere Hälfte des geblechten Rings zeigt hingegen die erfindungsgemäße Blechung 12.

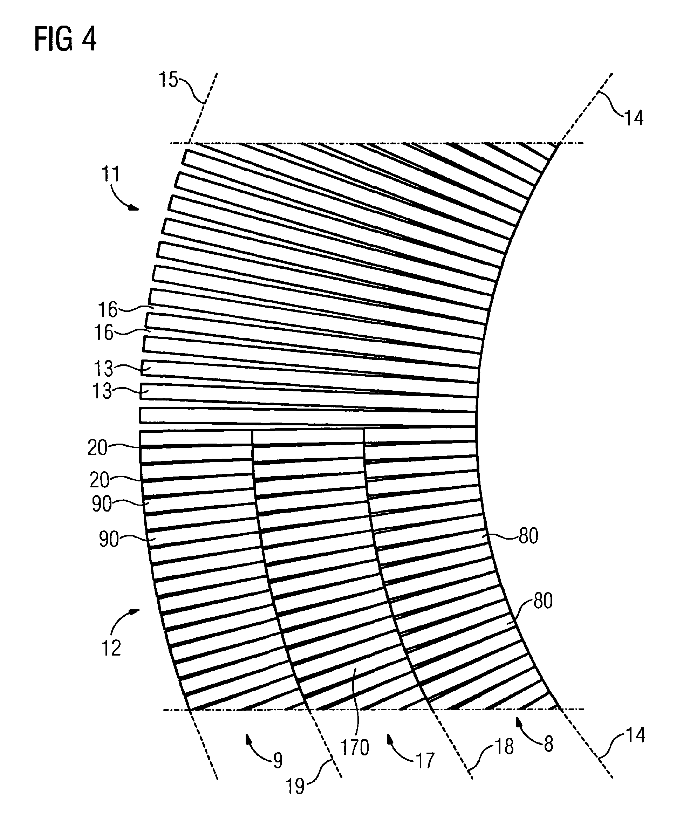

FIG 4 zeigt einen vergrößerten Ausschnitt des Rings von FIG 3. Dort sind die Unterschiede zwischen konventioneller Blechung 11 und erfindungsgemäßer Blechung 12 besser zu erkennen. Für die Blechungen werden hier übliche Elektrobleche verwendet. Sie besitzen überall die gleiche Dicke.

Bei der konventionellen Blechung 11 wie auch bei der erfindungsgemäßen Blechung 12 ragen die einzelnen Bleche radial nach außen. Es ergibt sich damit jeweils eine sternförmige Elektroblechanordnung. Für Erläuterungszwecke ist die gesamte ringförmige Elektroblechanordnung mit zwei verschiedenen Blechungen 11 und 12 dargestellt. In der Praxis wird natürlich eine Elektroblechanordnung nur eine von diesen beiden Blechungen über den gesamten Umfang hinweg besitzen.

Bei der konventionellen Blechung 11 ragt jedes einzelne Blech 13 in radialer Richtung vom Innenumfang 14 bis zum Außenumfang 15. Da die einzelnen Bleche 13 am Innenumfang 14 unmittelbar aneinanderstoßen, ergibt sich wegen des sternförmigen Aufbaus am Außenumfang 15 zwischen benachbarten Blechen 13 jeweils ein verhältnismäßig großer Spalt 16. Die Eisenfüllung eines derartig geblechten Rings ist entsprechend niedrig.

Bei der erfindungsgemäßen Blechung 12 sind mindestens zwei konzentrische Elektroblechringe, im vorliegenden Beispiel drei Elektroblechringe vorgesehen, nämlich der innere Elektroblechring 8, der äußere Elektroblechring 9 und der dazwischen liegende Elektroblechring 17. In den schematischen FIG 3 und FIG 4 besitzen die einzelnen Elektroblechringe 8, 9 und 17 jeweils gleiche radiale Dicke. Wie jedoch bereits aus FIG 2 zu erkennen ist, können die radialen Dicken der einzelnen Ringe unterschiedlich sein. Insbesondere können sie, wie ebenfalls im Zusammenhang mit FIG 5 erläutert wird, auch radial ineinander ragen.

Die untere Hälfte von FIG 4 verdeutlicht, dass die Einzelbleche 80, 90 und 170 radial kürzer sind als die Bleche 13 der konventionellen Blechung 11. Die Bleche 80 des inneren Elektroblechrings 8 sind auch nicht einteilig gebildet mit den Blechen 90 und 170 des äußeren Elektroblechrings 9 und des mittleren Elektroblechrings 17. Ebenso wenig sind die Bleche 90 einteilig mit den Blechen 170 gebildet. Dies hat nun den Vorteil, dass die Einzelbleche 80, 90 und 170 bei jedem der Elektroblechringe 8, 9 und 17 am jeweiligen Innenumfang bzw. Innenradius 14, 18, 19 aneinander stoßen können. Damit ist die Eisenfüllung an den Innenumfängen 14, 18, 19 jeweils 100% und sie nimmt zum jeweiligen Außenumfang des entsprechenden Elektroblechrings 8, 9, 17 etwas ab. Da sich die Einzelbleche 80, 90, 170 jedoch nicht von dem Innenumfang 14 des inneren Elektroblechrings 8 bis zum Außenumfang 15 des äußeren Elektroblechrings 9 erstrecken, ist der Spalt 20 zwischen beispielsweise benachbarten Blechen 90 in Umfangsrichtung deutlich geringer als ein jeweiliger Spalt 16 bei konventioneller Blechung 11. Ursache dafür ist, dass der äußere Elektroblechring 9 wesentlich mehr Bleche 90 besitzt als der mittlere Elektroblechring 17. Dieser wiederum besitzt deutlich mehr Bleche 170 als der innere Elektroblechring 8. Der innere Elektroblechring 8 besitzt ebenso viele Bleche 80 wie die Elektroblechanordnung mit konventioneller Blechung 11.

Mit den drei konzentrischen Elektroblechringen 8, 9 und 17 lässt sich eine deutlich höhere Eisenfüllung erreichen als bei konventioneller Blechung 11. Die erzielte Axialkraft ist proportional zur Eisenfüllung. Die Krafterhöhung ermittelt sich aus dem Verhältnis der Eisenfüllungen. Für eine Elektroblechanordnung mit einem einzigen Ring ergibt sich eine Eisenfüllung f1. Bei einer Elektroblechanordnung mit drei konzentrischen Elektroblechringen gleicher radialer Dicke ergibt sich eine Eisenfüllung f3. Das entsprechende Verhältnis der Eisenfüllungen lautet dann: f3/f1 = 1 + s/(3rᵢ) wobei s der radialen Dicke und rᵢ dem Innenradius der Elektroblechanordnung entspricht. Damit ergeben sich bei typischen Baugrößen von Elektromagneten bzw. Axiallagervorrichtungen Krafterhöhungen von 10% bis 20%.

In FIG 5 ist ein Ausschnitt des Querschnitts durch eine erfindungsgemäße Axiallagervorrichtung dargestellt. Insbesondere ist der im Querschnitt U-förmige Topf 5 mit seiner Außenwand 6 und seiner Innenwand 7 gut zu erkennen. An die Innenwand 7 schmiegt sich der geblechte innere Ring 8 an. An der Außenwand 6 liegt der äußere geblechte Ring 9 an. Zwischen den beiden Elektroblechringen 8 und 9 befindet sich der mittlere Elektroblechring 17. Die Blechung der einzelnen Ringe 8, 9, 17 ist in FIG 5 nicht erkennbar.

Die beiden Elektroblechringe 8, 9 erstrecken sich in axialer Richtung 21 vom Boden 22 des ringförmigen Topfs 5 bis zu den Oberkanten der Wände 6, 7. Der mittlere Elektroblechring 17 hingegen erstreckt sich in axialer Richtung 21 deutlich weniger weit. Dadurch ergibt sich axial über dem mittleren Elektroblechring 17 und zwischen dem äußeren Elektroblechring 9 und dem inneren Elektroblechring 8 eine Nut 23 für die Ringspule 10. Diese ist jedoch in FIG 5 nicht eingezeichnet.

Axial unterhalb des mittleren Elektroblechrings 17 befindet sich hier ein Haltering 24. Dieser besitzt einen T-förmigen Querschnitt und wird mit Schrauben 25 am Boden 22 des ringförmigen Topfs 5 befestigt. Die radial abstehenden Arme des im Querschnitt T-förmigen Halterings 24 greifen über Schultern 26 und 27 des inneren Elektroblechrings 8 und des äußeren Elektroblechrings 9. Damit werden die beiden Elektroblechringe 8, 9 in dem Topf 5 fixiert.

Die beiden Elektroblechringe 8, 9 besitzen außerdem in Umfangsrichtung verlaufende Nuten 28, 29, in die Vorsprünge des mittleren Elektroblechrings 17 ragen. Der mittlere Elektroblechring 17 wird damit formschlüssig (bezogen auf die axiale Richtung 21) zwischen dem inneren Elektroblechring 8 und dem äußeren Elektroblechring 9 gehalten. Somit können durch einen einzigen Haltering 24 die drei Elektroblechringe 8, 9 und 17 in dem Topf 5 gehalten werden. Prinzipiell können aber auch mehrere Halteringe zur Befestigung der Elektroblechringe vorgesehen sein.

Auch wenn die obigen Beispiele mit drei konzentrischen Elektroblechringen ausgeführt sind, kann die Elektroblechanordnung auch nur aus zwei konzentrischen Elektroblechringen oder auch aus vier und mehr Elektroblechringen bestehen. Bei zwei Elektroblechringen wäre dann beispielsweise eine Hälfte des in FIG 5 dargestellten mittleren Elektroblechrings einteilig mit dem äußeren Elektroblechring und die andere Hälfte einteilig mit dem inneren Elektroblechring verbunden.

Die Ringspule 10 braucht Kabelzuleitungen. Dafür können in axialer Richtung entsprechende Öffnungen bzw. Kabelausleitungen in der Elektroblechanordnung sowie dem Topf 5 vorgesehen sein. Im Beispiel von FIG 5 weist der Topf 5 in seinem Boden 22 hierfür eine Öffnung 30 auf. Da die Elektroblechanordnung hier drei Elektroblechringe aufweist, kann der mittlere Elektroblechring 17 an der axial mit der Öffnung 30 korrespondierenden Stelle einfach unterbrochen sein. Ebenso müsste der Haltering 24 hier unterbrochen sein, was in FIG 5 auch zu erkennen ist. Der innere und äußere Elektroblechring 8, 9 bleiben hingegen geschlossen. Bei einteiliger Blechung ergeben sich gegenüber der mehrteiligen hier weitere Nachteile, denn die Blechung muss an der Kabelausleitung unterbrochen werden, sodass die jeweiligen Bleche nicht mehr bis nach außen ragen können. Anderenfalls ergibt sich ein erheblicher Mehraufwand in der Bearbeitung, um eine Öffnung für die Anschlussleitungen zu schaffen.

Zur Erhöhung der mechanischen Festigkeit können die Hohlräume zwischen den Blechen der Elektroblechringe mit Harz vergossen werden.

In vorteilhafter Weise besitzt die erfindungsgemäße, als Ständer fungierende Axiallagervorrichtung eine gegenüber bekannten Vorrichtungen erhöhte Eisenfüllung, was zu einer entsprechend höheren Kraftdichte führt. Die konzentrische Anordnung mit mehreren Ringen führt außerdem zu einem robusten Aufbau, der kostengünstig herzustellen ist.

## Patentansprüche

1. **Magnetische** Axiallagervorrichtung (34) mit
- einer ringförmigen Elektroblechanordnung, bei der die einzelnen Bleche (80,90,170) radial nach außen ragen **und benachbarte Bleche (80,90,170) in Umfangsrichtung einen Spalt (20) ausbilden**, und
- einer elektrischen Spule (10), die in die Elektroblechanordnung eingefügt ist, zum Erzeugen eines Magnetfelds in der Elektroblechanordnung,
**dadurch gekennzeichnet, dass**
- die Elektroblechanordnung mindestens zwei konzentrische Elektroblechringe (8,9,17) aufweist und
- im Wesentlichen alle benachbarten **Bleche** (80,90,170) jedes Elektroblechrings (8,9,17) am Innenumfang des jeweiligen Elektroblechrings (8,9,17) zusammenstoßen.

2. **Magnetische** Axiallagervorrichtung nach Anspruch 1, wobei die Elektroblechanordnung drei konzentrische Elektroblechringe (8,9,17) aufweist, und wobei der mittlere der Elektroblechringe eine Vertiefung (23) bildet, in die die elektrische Spule (10) eingefügt ist.

3. **Magnetische** Axiallagervorrichtung nach Anspruch 2, wobei in dem mittleren Elektroblechring (17) eine Öffnung in axialer Richtung zur Durchleitung von Kabeln für die elektrische Spule (10) angeordnet ist.

4. **Magnetische** Axiallagervorrichtung nach einem der vorhergehenden Ansprüche, wobei die Elektroblechanordnung in einem ringförmigen Topf (5) untergebracht ist.

5. **Magnetische** Axiallagervorrichtung nach Anspruch 4, wobei die Elektroblechanordnung durch mindestens einen Haltering (24) in dem Topf (5) gehalten wird.

6. **Magnetische** Axiallagervorrichtung nach Anspruch 2 und 5, wobei der mindestens eine Haltering (24) im Querschnitt T-förmig ausgebildet ist und den inneren sowie den äußeren Elektroblechring (8,9) in axialer Richtung (21) formschlüssig in dem Topf (5) hält.

7. **Magnetische** Axiallagervorrichtung nach Anspruch 6, wobei der mittlere Elektroblechring (17) durch den inneren und äußeren Elektroblechring (8,9) formschlüssig in dem Topf (5) gehalten wird.

8. **Magnetische** Axiallagervorrichtung nach einem der vorhergehenden Ansprüche, wobei Hohlräume zwischen den Blechen (80,90,170) der Elektroblechanordnung mit einem Harz gefüllt sind.

9. Elektrische Maschine mit einer **magnetischen** Axiallagervorrichtung (3,4) gemäß einem der vorhergehenden Ansprüche.

## Claims

1. Magnetic axial bearing device (34) having
- an annular electrical sheet arrangement, in which the individual sheets (80, 90, 270) protrude radially outwards and adjacent sheets (80, 90, 170) embody a gap (20) in the peripheral direction, and
- an electrical coil (10), which is inserted into the electrical sheet arrangement in order to generate a magnetic field in the electrical sheet arrangement,
**characterised in that**
- the electrical sheet arrangement comprises at least two concentric electrical sheet rings (8, 9, 17), and
- essentially all adjacent sheets (80, 90, 170) of each electrical sheet ring (8, 9, 17) abut each other on the inner periphery of the respective electrical sheet ring (8, 9, 17).

2. Magnetic axial bearing device according to claim 1, wherein the electrical sheet arrangement comprises three concentric electrical sheet rings (8, 9, 17) and wherein the middle electrical sheet ring forms a depression (23), into which the electrical coil (10) is inserted.

3. Magnetic axial bearing device according to claim 2, wherein an opening is arranged in the axial direction in the middle electrical sheet ring (17) for the passage of cables for the electrical coil (10).

4. Magnetic axial bearing device according to one of the preceding claims, wherein the electrical sheet arrangement is accommodated in an annular pot (5).

5. Magnetic axial bearing device according to claim 4, wherein the electrical sheet arrangement is held in the pot (5) by means of at least one retaining ring (24).

6. Magnetic axial bearing device according to claim 2 and 5, wherein the at least one retaining ring (24) has a T-shaped cross-section and holds the inner and the outer electrical sheet ring (8, 9) in a form-fit manner in the pot (5) in the axial direction (21).

7. Magnetic axial bearing device according to claim 6, wherein the middle electrical sheet ring (17) is held in a form-fit manner in the pot (5) by means of the inner and outer electrical sheet ring (8, 9).

8. Magnetic axial bearing device according to one of the preceding claims, wherein cavities between the sheets (80, 90, 170) of the electrical sheet arrangement are filled with a resin.

9. Electrical machine having a magnetic axial bearing device (3, 4) according to one of the preceding claims.

## Revendications

1. Dispositif ( 34 ) de palier magnétique axial ayant
- un agencement annulaire de tôles électriques, dans lequel les diverses tôles ( 80, 90, 170 ) font saillie radialement vers l'extérieur et des tôles ( 80, 90, 170 ) voisines forment une fente ( 20 ) dans la direction périphérique, et
- une bobine ( 10 ) électrique, qui est insérée dans l'agencement de tôles électriques, pour la production d'un champ magnétique dans l'agencement de tôles électriques, **caractérisé en ce que**
- l'agencement de tôles électriques a au moins deux anneaux ( 8, 9, 17 ) concentriques de tôles électriques et
- sensiblement toutes les tôles ( 80, 90, 170 ) voisines de chaque anneau ( 8, 9, 17 ) de tôles électriques se touchent sur le pourtour intérieur de l'anneau ( 8, 9, 17 ) respectif de tôles électriques.

2. Dispositif de palier magnétique axial suivant la revendication 1, dans lequel l'agencement de tôles électriques a trois anneaux ( 8, 9, 17 ) concentriques de tôles électriques, et l'anneau médian de tôles électriques forme une cavité ( 23 ), dans laquelle la bobine ( 10 ) électrique est insérée.

3. Dispositif de palier magnétique axial suivant la revendication 2, dans lequel dans l'anneau ( 17 ) médian de tôles électrique est ménagée une ouverture dans la direction axiale pour le passage de câbles pour la bobine ( 10 ) électrique.

4. Dispositif de palier magnétique axial suivant l'une des revendications précédentes, dans lequel l'agencement de tôles électriques est logé dans un pot ( 5 ) annulaire.

5. Dispositif de palier magnétique axial suivant la revendication 4, dans lequel l'agencement de tôles électriques est maintenu dans le pot ( 5 ) par au moins un anneau ( 24 ) de maintien.

6. Dispositif de palier magnétique axial suivant les revendications 2 et 5, dans lequel le au moins un anneau ( 24 ) de maintien a une section transversale en T et maintient dans le pot ( 5 ), à complémentarité de forme dans la direction ( 21 ) axiale, l'anneau ( 8 ) intérieur de tôles électriques ainsi que l'anneau ( 9 ) extérieur de tôles électriques.

7. Dispositif de palier magnétique axial suivant la revendication 6, dans lequel l'anneau ( 17 ) médian de tôles électriques est maintenu dans le pot ( 5 ) à complémentarité de forme par l'anneau ( 8 ) intérieur de tôles électriques et par l'anneau ( 9 ) extérieur de tôles électriques.

8. Dispositif de palier magnétique axial suivant l'une des revendications précédentes, dans lequel des cavités entre les tôles ( 800, 90, 170 ) de l'agencement de tôles électriques sont remplies d'une résine.

9. Machine électrique ayant un dispositif ( 3, 4 ) de palier magnétique axial suivant l'une des revendications précédentes.
